(19) Europäisches Patentamt
European Patent Office
Office européen des brevets

(11) Veröffentlichungsnummer: **0 087 714**
**B1**

(12) **EUROPÄISCHE PATENTSCHRIFT**

(45) Veröffentlichungstag der Patentschrift: **05.12.84**

(51) Int. Cl.³: **C 07 C 103/00,** C 08 F 20/54, C 08 F 20/58

(21) Anmeldenummer: **83101641.5**

(22) Anmeldetag: **21.02.83**

(54) **N-substituierte (Meth)Acrylamid-Derivate und deren Herstellung.**

(30) Priorität: **02.03.82 DE 3207396**

(43) Veröffentlichungstag der Anmeldung: **07.09.83 Patentblatt 83/36**

(45) Bekanntmachung des Hinweises auf die Patenterteilung: **05.12.84 Patentblatt 84/49**

(84) Benannte Vertragsstaaten: **BE CH DE FR GB IT LI NL**

(56) Entgegenhaltungen:
**EP - A - 0 067 080**
**US - A - 4 130 702**

(73) Patentinhaber: **BASF Aktiengesellschaft, Carl-Bosch-Strasse 38, D-6700 Ludwigshafen (DE)**

(72) Erfinder: **Bott, Kaspar, Dr., Rieslingweg 4, D-6706 Wachenheim (DE)**
Erfinder: **Penzel, Erich, Dr., Carl-Bosch-Strasse 86, D-6700 Ludwigshafen (DE)**
Erfinder: **Eckert, Guenter, Dr., Flossbachstrasse 1, D-6703 Limburgerhof (DE)**

**EP 0 087 714 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei der Herstellung von Polymerisaten durch Polymerisation von olefinisch ungesättigten Monomeren ist es in manchen Fällen von Vorteil, in geringen Mengen solche monoolefinisch ungesättigte Monomere einzusetzen, die zusätzlich zu der olefinischen Doppelbindung noch andere reaktive Gruppen aufweisen. Als solche kommen z.B. Halogenalkylgruppen in Betracht. Durch Einpolymerisieren derartiger monoolefinisch ungesättigter Monomerer mit reaktiven Gruppen ist es möglich, Produkte zu erhalten, die z.B. leicht vernetzt oder mit solchen niedermolekularen Stoffen umgesetzt werden können, die eine Polymerisation stören würden.

Als monoolefinisch ungesättigtes Monomeres mit reaktiver Gruppe ist z.B. p-Chlormethylstyrol bekannt. Seine Synthese stösst aber in der Technik auf besondere Schwierigkeiten, weil eine einfache Chlormethylierung von Styrol oder eine Seitenkettenchlorierung des Methylstyrols wegen der eintretenden Nebenreaktionen technisch nicht sinnvoll ist.

Der vorliegenden Erfindung liegt nun die Aufgabe zugrunde, monoolefinisch ungesättigte Monomere in einfacher Weise herzustellen, die eine Halogenalkylgruppe aufweisen. Diese Aufgabe wird gemäss der vorliegenden Erfindung gelöst:

Es wurde nun gefunden, dass man N-substituierte (Meth)Acrylamidderivate der allgemeinen Formel I:

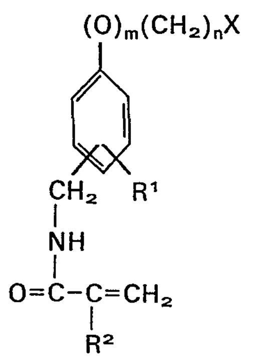

(I)

in der m für 0 oder 1, n für 1 bis 4, n-m für 1 bis 4, X für Br oder Cl, und $R^1$ und $R^2$ für $CH_3$ oder H stehen, in einfacher Weise herstellen kann, indem man aromatische Halogenalkylverbindungen der allgemeinen Formel II:

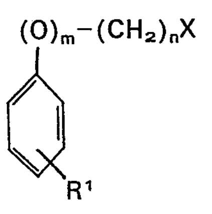

(II)

in der m für 0 oder 1, n für 1 bis 4, n-m für 1 bis 4, X für Br oder Cl, und $R^1$ für $CH_3$ oder H stehen, in Gegenwart starker Säuren mit N-Methylol(meth)-acrylamid umsetzt. Die N-substituierten (Meth)-Acrylamidderivate der allgemeinen Formel I sind neu. Die als Ausgangsstoffe dienenden aromatischen Halogenalkylverbindungen der allgemeinen Formel II sind bekannt.

Als starke Säuren kommen für das neue Herstellungsverfahren vor allem Schwefelsäure und/oder aliphatische und/oder aromatische Sulfonsäuren, wie besonders p-Toluolsulfonsäure und Methansulfonsäure in Betracht. Geeignet sind ferner solche Säuren, deren Acidität mit der der Schwefelsäure vergleichbar ist.

Arbeitet man in Gegenwart von Schwefelsäure, so ist es möglich, diese durch 1 bis 50 Gew.-% Essigsäure oder Wasser, bezogen auf die Gesamtmischung, zu verdünnen und dadurch die Umsetzung derart zu beeinflussen, dass eine Abspaltung von Halogen als Halogenwasserstoff während der Reaktion praktisch ausgeschlossen ist. Eine derartige Halogenwasserstoffabspaltung kommt in erster Linie für solche Verbindungen in Betracht, bei denen das Halogen in Benzylstellung steht (allgemeine Formel II mit m=0 und n=1). Im allgemeinen arbeitet man mit Schwefelsäure einer Konzentration von mindestens 50, vorzugsweise von 60 bis 80 Gew.-%. Die Konzentration an Essigsäure in einer Schwefelsäure der angegebenen Konzentration liegt vorzugsweise im Bereich von 20 bis 40 Gew.-%.

Bei der erfindungsgemässen Umsetzung beträgt das molare Verhältnis von aromatischer Halogenalkylverbindung II zu N-Methylolacrylamid oder N-Methylolmethacrylamid 0,5:1 bis 1,5:1, vorzugsweise 0,8:1 bis 1,2:1. Die Umsetzung kann bei Raumtemperatur, im allgemeinen bei Temperaturen von 5 bis 25, vorzugsweise von 10 bis 20°C durchgeführt werden. Insbesondere bei der Herstellung solcher N-substituierten (Meth)-Acrylamidderivate der allgemeinen Formel I, bei denen m=0 und n=1 ist, hat es sich bewährt, in eine Vorlage, die zunächst nur die starke Säure enthält, zunächst N-Methylolacrylamid bzw. N-Methylolmethacrylamid einzutragen und dann erst bei Temperaturen von im allgemeinen 5 bis 15, insbesondere von 5 bis 10°C die aromatische Halogenalkylverbindung der allgemeinen Formel II, in der m=0 und n=1 ist, zuzufügen.

Bei dem neuen Verfahren werden die neuen N-substituierten (Meth)Acrylamidderivate der allgemeinen Formel I im allgemeinen in Ausbeuten von 50 bis 80 Mol.-%, bezogen auf die eingesetzte Menge an (Meth)Acrylamidderivat, erhalten. Sie können aus dem Reaktionsgemisch z.B. durch Zufügen von Eis oder Eiswasser unter Hydrolyse ausgefällt werden, wobei die Menge an Wasser bzw. Eis meist 2- bis 6-, insbesondere 3- bis 5mal so gross ist wie die des Reaktionsgemisches. Das ausgefällte N-substituierte (Meth)Acrylamidderivat enthält im allgemeinen nur geringe Mengen an Verunreinigungen, die meist unter 5 bis 10 Gew.-% liegen. Es kann z.B. durch Umkristallisieren unter Verwendung von Essigsäureethylester oder Alkohol/Wasser-Gemischen oder durch Ausrühren mit Cyclohexan gereinigt werden. Als Verunreinigungen treten wie üblich isomere Verbindungen auf, die für die meisten Anwendungszwecke nicht abgetrennt werden müssen.

Die neuen N-substituierten (Meth)Acrylamidderivate der allgemeinen Formel I sind im Vergleich zu Acrylsäurealkylestern wesentlich hydrolysebeständiger. Sie polymerisieren sehr leicht und zeigen bei der Copolymerisation mit anderen, olefinisch ungesättigten Monomeren überraschenderweise eine höhere Polymerisationsgeschwindigkeit als entsprechende Vinylether oder -ester mit Halogenalkylgruppen. Die neuen N-substituierten (Meth)Acrylamidderivate der allgemeinen Formel I reizen im allgemeinen Schleimhäute praktisch nicht. Dies ist überraschend, da z.B. die Verbindungen II mit m=0 und n=1 stark reizen (Beilsteins Handbuch der „Org. Chemie", Bd. V, System Nr. 466, S. 293, oben, und S. 306, Zeilen 10 und 18, für Benzylchlorid und Benzylbromid).

Es ist zwar aus der Literatur (Übersichten: H.E. Zaugg, W.B. Martin in „Org. Rec.", Bd. 14, S. 52 ff. [1952] und H.E. Zaugg in „Synthesis", 1970, S. 49 ff.) bekannt, dass man die Umsetzung von N-Hydroxymethylcarbonsäureamiden mit aromatischen Verbindungen im Sinne einer nach Tscherniac und Einhorn benannten Reaktion dazu benutzen kann, Amidomethylgruppen in Benzolkerne einzuführen, und dass dabei im allgemeinen starke Säuren, wie besonders Schwefelsäure, als Kondensationsmittel einzusetzen sind. Starke Säuren, wie Schwefelsäure, bewirken jedoch eine heterolytische Abspaltung von Halogen aus Benzylhalogeniden, so dass nicht erwartet werden konnte, dass N-substituierte (Meth)Acrylamidderivate der allgemeinen Formel I durch Umsetzen von aromatischen Halogenalkylverbindungen der allgemeinen Formel II in starken Säuren gemäss der vorliegenden Erfindung in ausreichender Ausbeute hergestellt werden können.

Die in den folgenden Beispielen angegebenen Teile sind Gewichtsteile. Die darin angegebenen Volumenteile verhalten sich dazu wie das Liter zum Kilogramm. Die Strukturen der gemäss den folgenden Beispielen neu hergestellten Verbindungen sind durch Elementaranalyse und Protonenresonanzspektrum gesichert.

*Beispiel 1:*

*(p-Acrylamidomethylbenzylbromid)*

Man trägt 208 Teile (2,06 mol) N-Methylolacrylamid unter Rühren in eine Mischung aus 700 Vol.-Teilen 98%iger Schwefelsäure und 300 Vol.-Teilen Eisessig bei 15°C unter Kühlung mit Eiswasser ein. Man fügt dann bei dieser Temperatur nach und nach 342 Teile (2 mol) Benzylbromid zu und rührt anschliessend das Reaktionsgemisch noch 20 h bei 15 bis 22°C. Man fügt nun 50000 Teile kleingestossenes Eis zu, filtriert das ausgefallene Rohprodukt ab und wäscht es mit Wasser. Nach dem Trocknen an der Luft werden 378 Teile Rohprodukt (Ausbeute 74%) erhalten, aus dem durch Umkristallisieren mit Essigsäureethylester reines p-Acrylamidomethylbenzylbromid vom Smp. 167°C erhalten wird.

*Beispiel 2:*

*(p-Acrylamidomethylphenethylchlorid)*

In 300 Vol.-Teilen auf 15°C gekühlte Methansulfonsäure werden nacheinander 70 Teile (0,5 mol) Phenethylchlorid und 51,5 Teile (0,51 mol) N-Methylolacrylamid eingerührt. Man rührt noch 6 h bei 15 bis 20°C nach und fügt zur Hydrolyse 1500 Teile gestossenes Eis zu. Nach dem Auftauen und Abfiltrieren werden 84 Teile rohes p-Acrylamidomethylphenethylchlorid (Ausbeute 75%) (Lufttrocken) erhalten. Durch Umkristallisieren aus Methylalkohol erhält man reines p-Acrylamidomethylphenethylchlorid vom Smp. 145 bis 147°C.

*Beispiel 3:*

*(3-Acrylamidomethyl-p-xylylchlorid)*

In ein Gemisch aus 336 Teilen 98%ige Schwefelsäure und 164 Teilen Eisessig gibt man bei 15°C unter Kühlen zunächst 51,5 Teile (0,51 mol) N-Methylolacrylamid und dann 70 Teile (0,5 mol) p-Xylylchlorid. Man rührt dann 7 h bei 15 bis 20°C nach und gibt alsdann 2500 Teile feingestossenes Eis zu. Nach dem Auftauen wird abfiltriert und das Rohprodukt mit Petrolether zur Abtrennung von nicht umgesetztem p-Xylylchlorid gewaschen. Es werden 70,5 Teile 3-Acrylamidomethyl-p-xylylchlorid (Rohausbeute 63%) erhalten, aus dem durch Umkristallisieren aus Essigsäureethylester reines Produkt vom Smp. 151°C gewonnen wird.

*Beispiel 4:*

*(3-Methacrylamidomethyl-p-xylylchlorid)*

Analog zu den Angaben in Beispiel 3 werden 60 Teile (0,52 mol) N-Methylolmethacrylamid mit 70 Teilen p-Xylylchlorid umgesetzt. Nach dem Auswaschen mit Petrolether erhält man 59 Teile 3-Methacrylaminomethyl-p-xylylchlorid (Rohausbeute 50%). Das Rohprodukt wird in Diethylether suspendiert, bei Raumtemperatur gerührt und durch Filtrieren abgetrennt. Dabei wird reines 3-Methacrylamidomethyl-p-xylylchlorid vom Smp. 81 bis 83°C erhalten.

*Beispiel 5:*

*[p-Acrylamidomethyl-O-(2-bromethyl)phenol]*

Eine Lösung von 201 Teilen (1 mol) O-(2-Bromethyl)phenol in 1200 Vol.-Teilen Methansulfonsäure wird nach Zugabe von 101 Teilen (1 mol) N-Methylolacrylamid 3 h bei 20°C gerührt. Das anschliessend mit feingestossenem Eis ausgefällte Rohprodukt wird abfiltriert, in Petrolether suspendiert und erneut abfiltriert. Man erhält 193 Teile rohes p-Acrylamidomethyl-O-(2-bromethyl)phenol, aus dem durch Umkristallisieren aus einem Gemisch von Cyclohexan und Ethanol (2:1) reines p-Acrylamidomethyl-O-(2-bromethyl)phenol vom Smp. 125°C erhalten wird. Aus dem Petroletherfiltrat werden 30 Teile nicht umgesetztes O-(2-Bromethyl)phenol zurückgewonnen. Rohausbeute 80%, bezogen auf umgesetztes O-(2-Bromethyl)phenol.

**Patentansprüche**

1. N-substituierte (Meth)Acrylamidderivate der allgemeinen Formel (I):

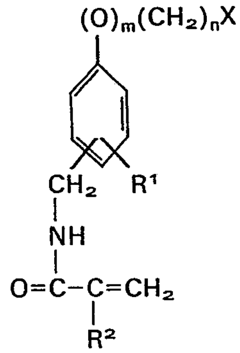

(I)

in der m für 0 oder 1, n für 1 bis 4, n−m für 1 bis 4, X für Br oder Cl, und $R^1$ und $R^2$ für $CH_3$ oder H stehen.

2. Verfahren zur Herstellung von N-substituierten (Meth)Acrylamidderivaten der allgemeinen Formel (I) gemäss Anspruch 1, dadurch gekennzeichnet, dass man aromatische Halogenalkylverbindungen der allgemeinen Formel (II):

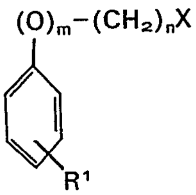

(II)

in der m für 0 oder 1, n für 1 bis 4, n−m für 1 bis 4, X für Br oder Cl, und $R^1$ für $CH_3$ oder H stehen, in Gegenwart starker Säuren als Kondensationsmittel mit N-Methylol(meth)acrylamid umsetzt.

3. Verfahren nach Anspruch 2, dadurch gekennzeichnet, dass man als starke Säuren Schwefelsäure und/oder aliphatische und/oder aromatische Sulfonsäuren einsetzt.

4. Verfahren nach Anspruch 2, dadurch gekennzeichnet, dass man in eine Vorlage, die zunächst nur die starke Säure enthält, zunächst das N-Methylol(meth)acrylamid und dann die aromatische Halogenalkylverbindung einträgt.

5. Verwendung der N-(Meth)Acrylamidderivate der allgemeinen Formel (I) als Comonomere bei der Copolymerisation olefinisch ungesättigter Monomerer.

## Revendications

1. Dérivés de (méth)acrylamide substitués sur N, de formule générale (I):

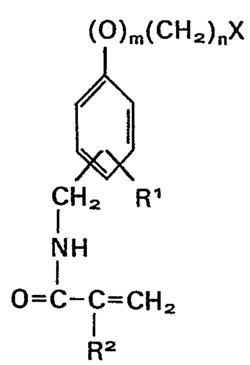

(I)

dans laquelle m représente 0 ou 1, n 1 à 4, n−m 1 à 4, X Br ou Cl, et $R^1$ et $R^2$ représentent $CH_3$ ou H.

2. Procédé de préparation de dérivés de (méth)acrylamide substitués sur N, de formule générale (I), selon la revendication 1, caractérisé par le fait que l'on fait réagir des composés halogénoalkyliques aromatiques de formule générale (II):

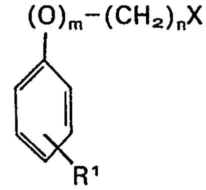

(II)

dans laquelle m représente 0 ou 1, n 1 à 4, n−m 1 à 4, X Br ou Cl, et $R^1$ représente $CH_3$ ou H en présence d'acides forts comme agent de condensation, avec du N-méthylol(méth)acrylamide.

3. Procédé selon la revendication 2, caractérisé par le fait que l'on utilise, comme acides forts, de l'acide sulfurique et/ou des acides sulfoniques aliphatiques et/ou aromatiques.

4. Procédé selon la revendication 2, caractérisé par le fait que, dans un récipient qui ne contient initialement que l'acide fort, on introduit d'abord le N-méthylol(méth)acrylamide et puis le composé halogénoalkylique aromatique.

5. Utilisation des dérivés de (méth)acrylamide substitués sur N, de formule générale (I), comme comonomères pour la copolymérisation de monomères à insaturation oléfinique.

## Claims

1. An N-substituted acrylamide or methacrylamide derivative of the general formula(I):

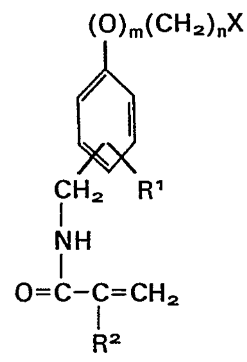

(I)

where m is 0 or 1, n is 1, 2, 3 or 4, n−m is 1, 2, 3 or 4, X is Br or Cl, and $R^1$ and $R^2$ are each $CH_3$ or H.

2. A process for the preparation of an N-substituted acrylamide or methacrylamide derivative of the general formula(I) as claimed in Claim 1, wherein an aromatic haloalkyl compound of the general formula (II):

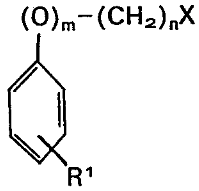

(II)

where m is 0 or 1, n is 1, 2, 3 or 4, n−m is 1, 2, 3 or 4, X is Br or Cl, and $R^1$ is $CH_3$ or H, is reacted with N-methylolacrylamide or N-methylolmethacrylamide in the presence of a strong acid as a condensing agent.

3. A process as claimed in Claim 2, wherein the strong acids employed are sulfuric acid and/or aliphatic and/or aromatic sulfonic acids.

4. A process as claimed in Claim 2, wherein first N-methylolacrylamide or N-methylolmethacrylamide and thereafter the aromatic haloalkyl compound are introduced into a vessel which initially contains only the strong acid.

5. The use of an N-acrylamide or N-methacrylamide derivative of the general formula (I) as a comonomer in the copolymerization of olefinically unsaturated monomers.